# EUROPEAN PATENT APPLICATION

(11) **EP 3 388 129 A1**
(43) Date of publication of application: **17.10.2018**
(21) Application number: 18166666.0
(22) Date of filing: 10.04.2018
(51) Int. Cl.: B01D 33/067, B01D 33/50, B01D 33/80, B01D 33/11

(54) **BALLAST WATER TREATMENT APPARATUS**

(30) Priority: 10.04.2017 JP 2017077632
(71) Applicant: Miura Co., Ltd., Matsuyama-shi, Ehime 799-2696 (JP)
(72) Inventor: Ikeda, Kazuhiro, Matsuyama-shi, Ehime 799-2696 (JP); Yamamoto, Takao, Matsuyama-shi, Ehime 799-2696 (JP); Kikuchi, Masashi, Matsuyama-shi, Ehime 799-2696 (JP)
(74) Representative: KNH Patentanwälte Neumann Heine Taruttis PartG mbB

(57) **Abstract**

**Problem**

To provide a ballast water treatment apparatus capable of suitably preventing contaminants from entering from a contact part between a rotating filter and a casing supporting the filter, thereby improving performance.

**Means to solve the problem**

Ballast water treatment apparatus 1 comprises a casing 10,a tubular filter 20 disposed inside the casing 10, a support shaft part configured to be a part of the casing 10 and rotatably to support the filter 20 at an end part of the filter 20, a line L3 wherein one end side connects to the support shaft part and the other end side connects to the casing 10, and the line L3 allows to connect a space on a secondary side of the filter 20 and a contact part between the support shaft part and the filter 20, and a pump 39 disposed in the line L3 and configured to supply the contact part with water inside the casing 10.

## Description

### Field of the Invention

The present invention relates to a ballast water treatment apparatus having a tubular filter.

### Background of the Invention

Conventionally, in ships such as tankers, when being navigated towards a destination again after unloading crude oil etc. of a shipment, in order to balance the ship being navigated, water called ballast water is reserved in a ballast tank. Ballast water is basically taken in at the unloading port and discharged at the loading port. Therefore, if these places are different, plankton and bacterial microorganisms contained in the ballast water move around the world. Accordingly, if ballast water is discharged at a loading port in a different sea area than the unloading port, the microorganisms in another sea area will be released to the area around the loading port. Hence, there is a danger of destroying the ecosystem of the area.

In order to remove contaminants such as microorganisms, sand, dust and the like contained in the ballast water, a ballast water treatment apparatus comprising a filter for filtering ballast water is used. As a filter used in the ballast water treatment apparatus, for example, a cylindrical filter body having a large number of holes formed on the peripheral surface thereof is used. In the ballast water treatment apparatus, permanent cleaning of the filter is considered important since filter clogging is severe.

For example, Patent Literature 1 proposes a ballast water treatment apparatus comprising a casing and a cylindrical filter disposed inside the casing, and capable of removing contaminants attached to the surface of the filter by rotating the filter.

### Prior Art Document

### Patent Literature

[Patent Literature 1] JPA 2014-227063

### Summary of the Invention

### Problem to be Solved

By the way, when the filter is rotated in the ballast water treatment apparatus, bearings and the like are arranged at the contact part between the rotating filter and the casing supporting the filter. During operation of the ballast water treatment apparatus, a large amount of water is introduced into the inside of the casing, and filtered by a filter. Since water introduced into the inside of the casing contains contaminants such as sand, dust, microorganisms, and the like, when these contaminants intrude into the contact part between the filter and the casing, the contact part is abraded by the contaminants. If the contact part between the filter and the casing is abraded, water before being filtered by the filter flows through the contact part into the secondary side of the filter. As a result, water filtration cannot be suitably performed in the ballast water treating apparatus, and the performance of the ballast water treating apparatus is deteriorated.

Accordingly, it is an object of the present invention to provide a ballast water treatment apparatus capable of suitably preventing contaminants from entering from a contact part between a rotating filter and a casing supporting the filter, thereby improving performance.

### Means for Solving the Problem

The present invention relates to Ballast water treatment apparatus, comprising: a casing; a tubular filter disposed inside the casing; a support shaft part constituting a part of the casing and rotatably to support the filter at an end part of the filter; a line, wherein one end side of the line connects to the support shaft part and the other end side of the line connects to the casing, and the line allows to connect a space on a secondary side of the filter and a contact part between the support shaft part and the filter; and a pump disposed in the line and configured to supply the contact part with water inside the casing.

Further, preferably, the apparatus further comprises a continuous spatial part continuously formed over entire circumference at a contact part between the support shaft part and the filter, and the line allows to connect the space on the secondary side of the filter and the continuous space part.

Further, preferably, the pump is driven with an output at which pressure of the water supplied to the contact part is higher than pressure of the water on a primary side of the filter.

Further, preferably, the pump is constituted by an air driven pump.

Further, preferably, the apparatus further comprises a seal member disposed at the contact part, and the line allows to connect the space on the secondary side of the filter and a region closer to an axial end of the support shaft part than a region having the seal member in the contact part disposed therein.

Further, preferably, the seal member is disposed on both sides across a connecting part of the line to the contact part.

Further, preferably, the seal member comprises a main body part annularly formed and having a U shape, in a cross sectional shape in a radial direction, the U shape including a hollow part in which one end side is open, and an elastic member disposed in the hollow part and energizing the main body part in a direction expanding outward.

### Effect of the Invention

According to the ballast water treatment apparatus of the present invention, it is possible to suitably prevent contaminants from entering from a contact part between a rotating filter and a casing supporting the filter, thereby improving performance.

### Brief Description of the Drawings

Fig. 1 is a diagram showing a configuration of a ballast water treatment apparatus according to one embodiment of the present invention.
Fig. 2 is a partially enlarged view of Fig. 1.
Fig. 3 is a partially enlarged view of Fig. 2.

### Embodiment

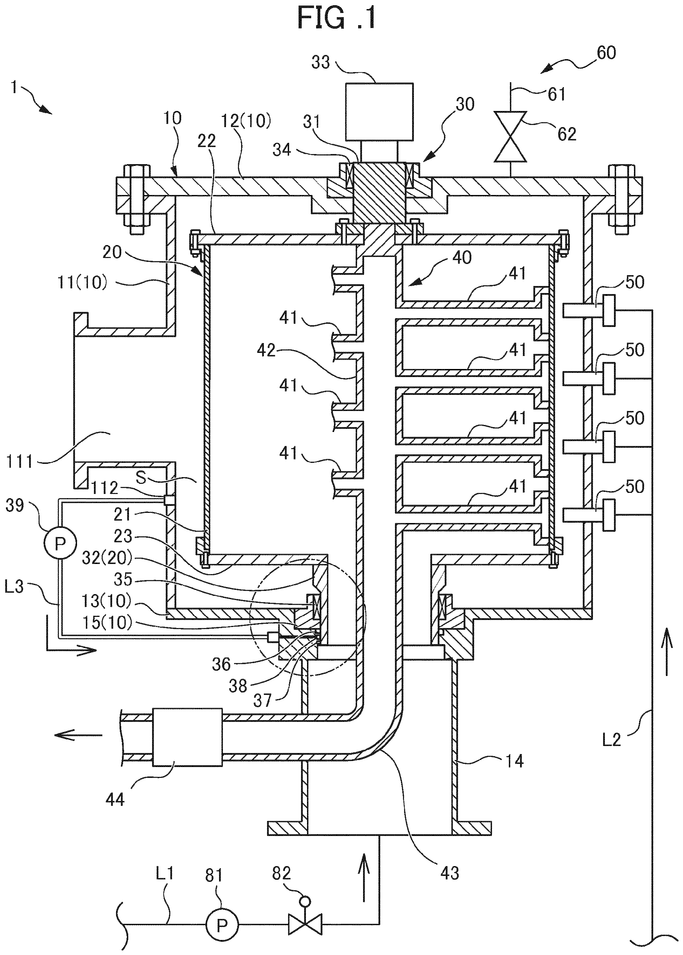

Hereinafter, a preferred embodiment of the ballast water treatment apparatus of the present invention will be described with reference to the drawings. The ballast water treatment apparatus 1 of the present embodiment is attached to a ship provided with a line for pumping water such as seawater and a ballast tank for storing the pumped water as ballast water. And it is used to remove contaminants contained in the pumped water. As shown in Fig. 1, the ballast water treatment apparatus 1 includes a casing 10, a filter 20 disposed inside the casing 10, a filter rotating means 30, an introduction part 14 for introducing ballast water into the casing 10, a backwash mechanism 40 for back washing the filter 20, an injection nozzle 50 for injecting flush water to the filter 20, and a compressed gas supply unit 60 for supplying compressed gas to the inside of the casing 10.In addition, the ballast water treatment apparatus 1 is provided with an introduction line L1 for introducing ballast water into the casing 10, a flush water line L2, a connecting part allowing to connect a space on the secondary side of the filter 20 and a contact part between the casing 10 and the filter 20.In this specification, the term "line" is a generic term for lines through which fluids such as flow paths, routes, pipelines and the like can flow. Further, "a contact part between the casing 10 and the filter 20" means a part in which the rotating filter 20 and the part rotatably supporting the filter 20 in the casing 10 are disposed in contact with or in close proximity to each other.

The casing 10 stores ballast water. The casing 10 comprises a cylindrical main body part 11 having an upper end part and a lower end part opened, an upper lid part 12 for sealing the upper end part of the main body part 11, a lower lid part 13 for sealing the lower end part of the main body part 11. On the peripheral surface of the main body part 11, an outflow port 111 is provided in the casing 10. Then, ballast water filtered by a filter 20 described later flows out from the outflow port 111. Through holes in which the filter rotating means 30 described later is arranged, are formed at each position which coincides with the central axis of the main body part 11 in the upper lid part 12 and the lower lid part 13.

The filter 20 comprises a cylindrical filter main body 21 having an upper end part and a lower end part open, an upper closing part 22 for sealing the upper end part of the filter main body 21, and a lower closing part 23 for sealing the lower end part of the filter main body 21. The filter 20 (filter main body 21) is formed into a cylindrical shape smaller than the casing 10, and is arranged inside the casing 10 so as to be coaxial with the casing 10. Thus, a space S1 in which the ballast water filtered by the filter 20 flows out is formed between the casing 10 and the filter 20.A through hole for introducing ballast water inside the filter 20 is formed in the position coincident with the center axis of the filter main body 21 in the lower closing part 23.

The filter rotating means 30 rotates the filter 20 disposed inside the casing 10 with the center axis as a rotation axis. The filter rotating means 30 includes an upper rotary shaft member 31, a lower rotary shaft member 32, and a motor 33 for rotating the upper rotary shaft member 31. The upper rotary shaft member 31 protrudes upward and is fixed at a position corresponding to the center axis of the filter 20 in the upper closing part 22 of the filter 20. The lower rotary shaft member 32 protrudes downward and is fixed at a position corresponding to the center axis of the filter 20 in the lower closing part 23 of the filter 20. That is, the upper rotary shaft member 31 and the lower rotary shaft member 32 respectively constitute the end part of the filter 20.

The upper rotary shaft member 31 is disposed in a through hole formed in the upper lid part 12 of the casing 10 and is rotatably and liquid tightly supported by the upper lid part 12 via a slide bearing 34. The lower rotary shaft member 32 is disposed in a through hole formed in the lower lid part 13 of the casing 10 and is rotatably and liquid tightly supported by the lower lid part 13 via a slide bearing 35. The lower rotary shaft member 32 is a tubular body communicating with the inside of the filter 20. The upper end part of the lower rotary shaft member 32 is connected to the through hole formed in the lower closing part 23 and the lower end part is located inside the through hole formed in the lower lid part 13 of the casing 10.

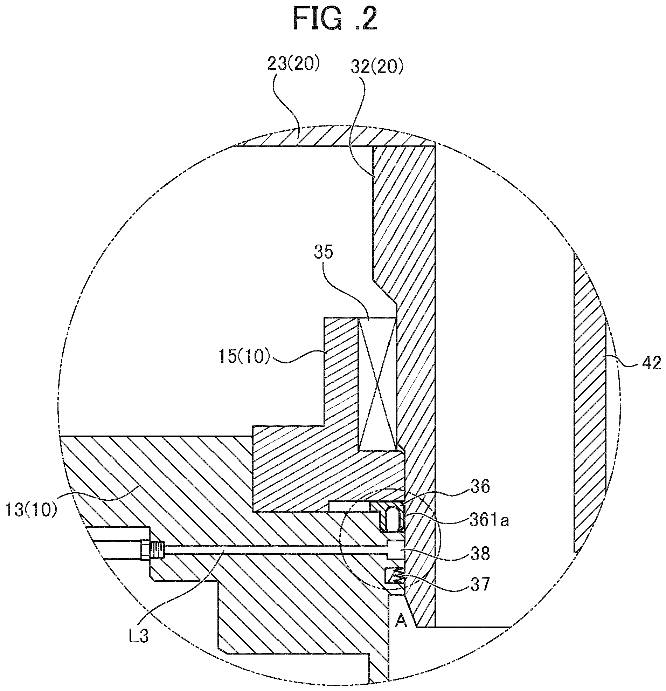

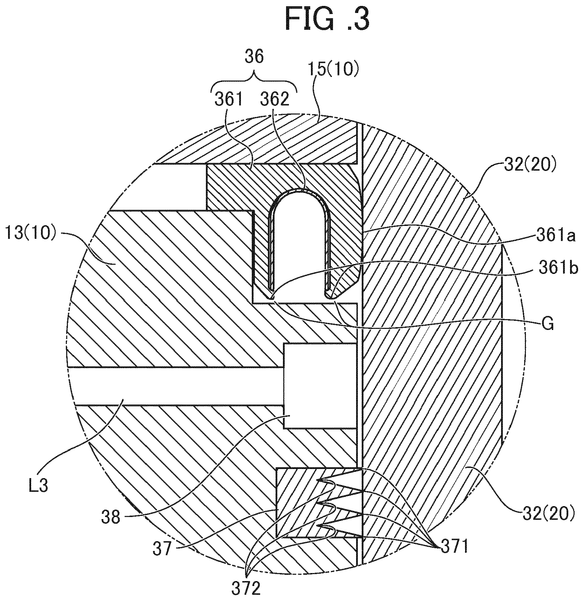

Here, the structure of the contact part between the casing 10 and the filter 20 (the lower rotary shaft member 32) via the slide bearing 35 will be described with reference to Figs. 2 and 3. As shown in Fig. 1, the lower rotary shaft member 32 is disposed inside the through hole of the lower lid part 13.As shown in Fig. 2, at the contact part between the lower lid part 13 and the lower rotary shaft member 32, a support shaft member 15 constituting a part of a support shaft part, the slide bearing 35, a first seal member 36, and a second seal member 37 are disposed. Further, a continuous space part 38 is formed in this contact part.

The support shaft member 15 is formed in a tubular shape and is disposed on the upper surface side of a part of the casing 10 (the lower lid part 13) on which the through hole is formed. The support shaft member 15 is fixed to the lower lid part 13 by a bolt or the like (not shown) and integrated with the casing 10. That is, the support shaft member 15 constitutes a part of the casing 10.

The slide bearing 35 is formed in a cylindrical shape and is press-fitted to the inner peripheral surface of the support shaft member 15 and fixed to the support shaft member 15. The slide bearing 35 is formed into a tubular shape by, for example, a hard synthetic resin or a composite material of a synthetic resin and a fiber.

The first seal member 36 is formed in an annular shape and is disposed inside the through hole of the lower lid part 13. More specifically, the first seal member 36 is disposed on the end side (lower side) in the axial direction with respect to the slide bearing 35 at the contact part between the casing 10 and the lower rotary shaft member 32. In the present embodiment, as shown in Fig. 2, the first seal member 36 is disposed in a recess formed on the inner peripheral surface side at the boundary part between the lower lid part 13 and the support shaft member 15.

As shown in Figs. 2 and 3, the first seal member 36 comprises a main body part 361 formed in a cross-sectional shape having a hollow part opened at one end face side (lower face side in Fig. 3), and a spring member 362 as an elastic member disposed in the hollow part of the main body part 361. The main body part 361 is formed of, for example, a hard synthetic resin. For example, the spring member 362 is made of a metal leaf spring bent so as to have a U-shaped cross part. The spring member 362 energizes the side surface of the main body part 361 in a direction expanding. That is, according to the first seal member 36 of the present embodiment, the side surface 361a disposed on the inner peripheral surface side of the through hole in the main body part 361 is pressed toward the lower rotary shaft member 32 side by the urging force of the spring member 362. The lower end part of the side surface 361a is an inclined surface inclined toward the side away from the lower rotary shaft member 32. In the present embodiment, as shown in Fig. 3, a slight gap G is formed between the lower end part 361b of the main body part 361 and the recess in a state where the first seal member 36 is disposed in the recess.

The second seal member 37 is annularly formed of a hard resin member and is arranged inside the through hole of the lower lid part 13. More specifically, the second seal member 37 is arranged on the axial end side (lower side) of the first seal member 36 at the contact part between the casing 10 and the lower rotary shaft member 32.

In the present embodiment, as shown in Fig. 2, the second seal member 37 is disposed in a recess formed on the inner peripheral surface side of the lower lid part 13. As shown in Fig. 3, the second seal member 37 has a plurality of ridges 371 and valley parts 372 formed continuously over the entire circumference on an annular inner circumferential surface. By forming a plurality of ridges 371 on the inner peripheral surface of the second seal member 37, the frictional force generated between the lower rotary shaft member 32 (filter 20) and the lower rotary shaft member 32 (filter 20) can be reduced while securing the sealing performance of the second seal member 37.

The continuous space part 38 is continuously formed over the entire circumference at a contact part between the lower lid part 13 and the lower rotary shaft member 32. In the present embodiment, the continuous space part 38 is constituted by a recess formed over the entire circumference of the inner peripheral surface on the inner peripheral surface of the lower lid part 13. A line L3 to be described later is connected to the continuous space part 38. The functions of the continuous space part 38 and the line L3 will be described later.

According to the above structure, the outer peripheral surface of the lower rotary shaft member 32 rotatably contacts the inner peripheral surfaces of the slide bearing 35, the support shaft member 15, the first seal member 36, the second seal member 37, and the lower lid part 13. In other words, in the present embodiment, the support shaft part rotatably supporting the lower rotary shaft member 32 is constituted by a part of the support shaft member 15 and the lower lid part 13.

Returning to Fig. 1, the introduction part 14 is formed by a tubular member, and is connected to the lower lid part 13 so that one end part (upper end part) covers the lower end side of the lower rotary shaft member 32. The other end (lower end) of the introduction part 14 is connected to an introduction line L1 to be described later, and the ballast water supplied from the introduction line L1 is introduced into the primary side of the filter 20 inside the casing 10.

The backwash mechanism 40 comprises a nozzle 41, a collecting pipe 42, a discharge pipe 43, and an on-off valve 44 disposed in the discharge pipe 43.

The nozzle 41 is disposed on the primary side (inner side) of the filter 20, and its tip end side opens toward the primary side surface (inner peripheral surface) of the filter 20. In the present embodiment, the nozzle 41 is arranged so as to extend in a direction perpendicular to the direction in which the central axis of the filter 20 extends. In addition, a plurality of nozzles 41 are arranged with a predetermined interval in the extending direction (vertical direction) of the center axis of the filter 20. Ballast water flowing from the secondary side of the filter 20 toward the primary side and contaminants detached from the inner peripheral surface of the filter 20 by the ballast water flow through the nozzle 41.

The collecting pipe 42 is disposed at a position coincident with the central axis of the filter 20, and the upper end part thereof is closed while the lower end part thereof is opened. The upper end part of the collecting pipe 42 is inserted and supported in a hole provided in the center of the upper closing part 22 of the filter 20. In the collecting pipe 42, the ballast water and contaminants flowing through the nozzle 41 get together and flow.

An upper end part of the discharge pipe 43 is connected to a lower end part of the collecting pipe 42, and the discharge pipe 43 extends downward inside the lower rotary shaft member 32 so as not to prevent the rotation of the filter 20. The lower end side of the discharge pipe 43 is bent and extends, and penetrates the peripheral surface of the introduction part 14. The discharge pipe 43 discharges the ballast water and contaminants flowing through the collecting pipe 42. The on-off valve 44 is disposed on the secondary side of the penetrated part of the introduction part 14 in the discharge pipe 43, and opens and closes the discharge pipe 43.

The injection nozzle 50 is disposed on the secondary side of the filter 20, and its tip end part opens toward the secondary side surface (outer peripheral surface) of the filter 20. In the present embodiment, a plurality of injection nozzles 50 are arranged at predetermined intervals in the extending direction (vertical direction) of the center axis of the filter 20. The injection nozzle 50 is connected to a flush water line L2 to be described later and injects the flush water supplied from the flush water line L2 toward the secondary side surface of the filter 20.

The compressed gas supply unit 60 comprises a compressed gas supply source (not shown) such as a compressor, a compressed gas supply line 61, and a compressed gas supply valve 62. The compressed gas supply line 61 is connected to the upper lid part 12 of the casing 10, and supplies compressed gas to a region between the filter 20 and the casing 10 (the secondary side of the filter 20 inside the casing 10).

The introduction line L1 introduces ballast water (seawater) into the casing 10. The tip end part of the introduction line L1 is connected to the introduction part 14. A pump 81 and an on-off valve 82 are disposed in the introduction line L1.

The tip end to side of the flush water line L2 is connected to the injection nozzle 50, and the flush water line L2 supplies flush water to the injection nozzle 50.
The base end side of the flush water line L2 is connected to a flush water supply source (not shown).

The tip end side (one end side) of the line L3 is connected to the support shaft part (lower lid part 13), and the base end side (the other end side) of the line L3 is connected to the casing 10 (main body part 11). As a result, the space on the secondary side of the filter 20 (the space S between the filter 20 and the casing 10), the contact part between the support shaft part (the lower lid part 13) and the filter 20 (the lower rotary shaft member 32) are connected with each other. More specifically, the tip end side of the line L3 is connected to the continuous space part 38 formed in the lower lid part 13, and the base end side of the line L3 is connected to the main body part 11 via a socket 112 attached to the peripheral surface of the main body part 11 of the casing 10. A pump 39 is arranged on the line L3.

The pump 39 boosts the ballast water existing in the space on the secondary side of the filter 20 and supplies the ballast water to a contact part (in the present embodiment, the continuous space part 38) between the lower lid part 13 and the lower rotary shaft member 32. In the present embodiment, the pump 39 is constituted by an air driven pump. Further, the pump 39 is driven with an output at which the pressure of the water supplied to the contact part through the line L3 is higher than the pressure of the water on the primary side of the filter 20.

According to the above ballast water treatment apparatus 1, when ballast water is filtered, the on-off valve 82 of the introduction line L1 is opened, and the pump 81 is driven. Further, the filter 20 is rotated by the filter rotating means 30. Then, the ballast water supplied to the introduction part 14 from the introduction line L1 is introduced into the primary side (inner side) of the filter 20 inside the casing 10 through the lower rotary shaft member 32, filtered by the filter 20, and is discharged from an outflow port 111. The ballast water flowing out from the outflow port 111 is stored in a ballast tank (not shown).

In this state, the inside of the nozzle 41, the collecting pipe 42, and the discharge pipe 43 becomes a negative pressure with respect to the inside of the casing 10 by opening the on-off valve 44 of the backwash mechanism 40. Then, a part of the ballast water filtered from the primary side to the secondary side (the ballast water outflow space S1 side) of the filter 20 again flows from the secondary side to the primary side of the filter 20. Thereby, contaminants adhering to the inner peripheral surface of the filter 20 are detached and sucked from the nozzle 41. The ballast water flowing through the nozzle 41 and the detached contaminants are discharged through the collecting pipe 42 and the discharge pipe 43. As a result, the filter 20 is backwashed, and contaminants adhered to the primary side of the filter 20 are removed. When filtering the ballast water, the compressed gas supply valve 62 of the compressed gas supply unit 60 is closed.

On the other hand, after the operation of the ballast water treatment apparatus 1 is finished or when it is desired to wash the filter 20 more strongly, the ballast water contained in the casing 10 is discharged. Thereafter, the washing is performed by injecting flush water to the filter 20 with no water in the casing 10 to remove contaminants. In such a case, the on-off valve 82 of the introduction line L1 is first closed, and the pump 81 is stopped. Further, the on-off valve of the backwash mechanism 40 is closed. In this state, the compressed gas supply valve 62 of the compressed gas supply unit 60 is opened. As a result, the ballast water contained in the casing 10 is promptly discharged.

Here, in a state where filtering of the ballast water is performed by rotating the filter 20, water, before filtration, including contaminants flows in the introduction part 14 and the lower rotary shaft member 32.Therefore, if the contaminants contained in the water flowing from the introduction part 14 toward the inside of the lower rotary shaft member 32 moves, for example, from the part A shown in Fig. 2 to a contact part between the rotating lower rotary shaft member 32 and the casing 10 supporting the lower rotary shaft member (Lower lid part 13), the seal member (the first seal member 36 and / or the second seal member 37) may be abraded by the intruded contaminants. When the seal member is abraded, the water before being filtered by the filter 20 through the contact part between the filter 20 and the casing 10 flows into the secondary side of the filter 20. For this reason, water filtration cannot be suitably performed in the ballast water treatment apparatus 1.

Therefore, in the present embodiment, by supplying the ballast water filtered by the filter 20 to the contact part between the casing 10 (the lower rotary shaft member 32) and the filter 20 (the lower rotary shaft member 32), contaminants contained in the water on the primary side is prevented from entering the contact part.

More specifically, in the present embodiment, in a state where the filter 20 is rotated to filter the ballast water, by driving the pump 39, the ballast water filtered by the filter 20 is discharged through the line L3 to the contact part between the lower lid part 13 and the lower rotary shaft member 32. As a result, the water filtered by the filter 20 can be supplied to the contact part between the lower lid part 13 and the lower rotary shaft member 32 through the line L3, so that the pressure of the water supplied to the contact part allows to prevent contaminants contained in the water on the primary side from entering the contact part. Therefore, it is possible to prevent contaminants from entering the secondary side from the primary side of the filter 20 through the contact part between the lower lid part 13 and the lower rotary shaft member 32, so that the performance of the ballast water treatment apparatus 1 can be improved.

Further, the ballast water treatment apparatus 1 was configured to include a continuous space part 38 formed at the contact part between the lower lid part 13 and the lower rotary shaft member 32, and thereby the line L3 was allowed to communicate with the continuous space part 38. Accordingly, the water pressure can be more stably applied to the contact part between the lower lid part 13 and the lower rotary shaft member 32. Therefore, it is possible to further improve the effect of preventing contaminants from entering due to water pressure.

Further, the pump 39 was driven with an output at which the pressure of the water supplied to the contact part was higher than the pressure of the water on the primary side of the filter 20. As a result, the pressure of the water supplied to the contact part through the line L3 can be made higher than the water pressure on the primary side of the filter 20, so that it is even more preferable to prevent water from entering the contact part from the primary side of the filter 20.

Further, the pump 39 is constituted by an air-driven pump. As a result, the heat generated by the driving of the pump 39 can be reduced, so that the occurrence of cavitations due to the heat generation of the pump 39 can be prevented.

In addition, the ballast water treatment apparatus 1 is configured to include the first seal member 36 disposed at the contact part, and the line L3 is connected to the end part side (the lower end side) with respect to a region in which the first seal member 36 at the contact part is arranged. As a result, the water filtered by the filter 20 can be supplied to the more primary side of the filter 20 than the region where the first seal member 36 is disposed in the contact part. Therefore, it is possible to effectively prevent the water on the primary side of the filter 20 from reaching the first seal member 36, so that the life of the first seal member 36 can be prolonged.

In addition, as the seal member, the first seal member 36 and the second seal member 37 are disposed on both sides across the communication part (continuous space part 38) to the contact part of the line L3, respectively. As a result, the water pressure can be suitably applied to the region surrounded by the first seal member 36 and the second seal member 37 at the contact part, so that the effect of preventing contaminants from entering due to water pressure can be further improved.

Further, the first seal member 36 is configured to include a main body part annularly formed into a U-shape having a hollow part having one end face side opened in a radial sectional shape and an elastic member disposed in the hollow part for energizing the main body part in a direction expanding outwardly.
Thereby, the sealing performance of the first seal member 36 can be improved.

Further, the first seal member 36 was disposed in the recess so as to form a slight gap G between the lower end part 361b of the main body part 361 and the recess (see Fig. 3). As a result, water supplied from the line L3 to the contact part via the continuous space part 38 is allowed to flow from the gap G into the hollow part of the main body part 361. Therefore, the pressure of the water flowing into the hollow part of the main body part 361 makes it easier for the main body part 361 to expand outward, so that the sealing performance of the first seal member 36 can be further improved.

A preferred embodiment of the ballast water treatment apparatus of the present invention has been described above. However, the present invention is not limited to the above-described embodiments, and can be implemented in various forms. For example, in the present embodiment, as the first seal member 36, a seal member including a main body part 361 and a spring member 362 arranged in a hollow part of the main body part 361 is used, and as the second seal member 37, a seal member having a plurality of ridges 371 and valley parts 372 continuously formed over the whole annular inner circumferential surface is used, but it is not limited thereto. That is, both the first seal member and the second seal member may be constituted by the same seal member as the first seal member of the present embodiment, and both of them may be the same seal members as the second seal member of the present embodiment. In addition, an O ring or a grease may be used as the first seal member or the second seal member.

Further, in the present embodiment, the ballast water treatment apparatus 1 includes the first seal member 36 and the second seal member 37, but the present invention is not limited thereto. That is, the ballast water treatment apparatus may be configured to include only one of the first seal member and the second seal member, or may be configured not to include the first seal member and the second seal member.

Although the structure of the contact part between the casing 10 and the lower rotary shaft member 32 via the slide bearing 35 has been described in this embodiment, the same configuration may be applied to the contact part between the casing 10 and the upper rotary shaft member 31 via the slide bearing 34.

Further, in the present embodiment, the filter 20 is a tubular filter which filters the ballast water flowing into the inside and allows it to flow out, but this is not a limitation. That is, the filter may be a tubular filter that filters out ballast water flowing from the outside and flows out from the inside.

Further, in the present embodiment, the ballast water treatment apparatus 1 is configured to include the injection nozzle 50 and the flush water line L2, but the present invention is not limited to this. That is, the ballast water treatment apparatus may be configured not to include the injection nozzle and the flush water line.

### Explanation of sign

- 1: ballast water treatment apparatus
- 10: casing
- 11: main body part
- 111: outflow port
- 112: socket
- 12: upper lid part
- 13: lower lid part (support shaft part)
- 14: introduction part
- 15: support shaft member (support shaft part)
- 20: filter
- 21: filter main body
- 22: upper closing part
- 23: lower closing part
- 30: filter rotating means
- 31: upper rotary shaft member
- 32: lower rotary shaft member
- 33: motor
- 34: slide bearing
- 35: slide bearing
- 36: first seal member (seal member)
- 361: main body part
- 361a: side surface
- 361b: lower end part
- 362: spring member (elastic member)
- 37: second seal member (seal member)
- 38: continuous space part
- 39: pump
- 40: backwash mechanism
- 41: nozzle
- 42: collecting pipe
- 43: discharge pipe
- 44: on-off valve
- 50: injection nozzle
- 60: compressed gas supply unit
- 61: compressed gas supply line
- 62: compressed gas supply valve
- L3: line
- L1: introduction line
- L2: flush water line
- G: gap
- S: space

## Claims

1. Ballast water treatment apparatus, comprising:
a casing;
a tubular filter disposed inside the casing;
a support shaft part constituting a part of the casing and rotatably to support the filter at an end part of the filter;
a line, wherein one end side of the line connects to the support shaft part and the other end side of the line connects to the casing, and the line allows to connect a space on a secondary side of the filter and a contact part between the support shaft part and the filter; and
a pump disposed in the line and configured to supply the contact part with water inside the casing.

2. The apparatus of Claim 1,
further comprising a continuous spatial part continuously formed over entire circumference at a contact part between the support shaft part and the filter, and
wherein the line allows to connect the space on the secondary side of the filter and the continuous space part.

3. The apparatus of Claim 1 or 2,
wherein the pump is driven with an output at which pressure of the water supplied to the contact part is higher than pressure of the water on a primary side of the filter.

4. The apparatus of any one of Claims 1 to 3,
wherein the pump is constituted by an air driven pump.

5. The apparatus of any one of Claims 1 to 4,
further comprising a seal member disposed at the contact part, wherein the line allows to connect the space on the secondary side of the filter and a region closer to an axial end of the support shaft part than a region having the seal member in the contact part disposed therein.

6. The apparatus of Claim 5,
wherein the seal member is disposed on both sides across a connecting part of the line to the contact part.

7. The apparatus of Claims5 or 6, wherein:
the seal member comprises
a main body part annularly formed and having a U shape, in a cross sectional shape in a radial direction, the U shape including a hollow part in which one end side is open, and
an elastic member disposed in the hollow part and energizing the main body part in a direction expanding outward.
